# EUROPEAN PATENT SPECIFICATION

(11) **EP 2 832 274 B1**
(45) Date of publication and mention of the grant of the patent: **30.03.2016**
(21) Application number: 14150107.2
(22) Date of filing: 03.01.2014
(51) Int. Cl.: A47J 43/07

(54) **Juicer**
Entsafter
Centrifugeuse

(30) Priority: 31.07.2013 CN 201320460241 U
(43) Date of publication of application: 04.02.2015
(73) Proprietor: Huiyang Allan Plastic & Electric Industries Co., Limited, 516035 Huizhou City Guangdong (CN)
(72) Inventor: Cheung, Shu Sang, 516035 Huizhou City (CN); Ouyang, Xianliang, 516035 Huizhou City (CN)
(74) Representative: Karakatsanis, Georgios

(56) References cited:
- WO-A1-2012/075525
- CN-U- 202 096 079
- DE-A1- 19 513 224
- DE-A1-102005 040 525
- GB-A- 2 093 553
- US-A- 4 371 118
- US-A- 4 741 482

## Description

### Technical Field

The present invention relates to a juicer.

### Background Art

Nowadays, juicers on sale generally include a safety mechanism which is used to enlarge the opening size of the feed tube. When user puts away pusher, the safety mechanism can shut off motor power and the cutter of juicer can be stopped as well, so it will be more safety for user. In general way, some safety mechanisms include a micro switch set in the base and a trigger assembly set in container or feed tube. Because of fatigue wear of mechanical structure, it will happen that the micro switch can not be triggered after pusher is inserted into the feed tube. On the other side, the gap between micro switch and trigger assembly will be increased due to long time friction, it will influence the normal using. In addition, the running length of micro switch is so short, so that the accuracy of trigger assembly is needed to be high, indirectly, it will increase the cost of juicer. For example, Chinese patent whose published NO. is CN200980565Y discloses a safety mechanism of vegetable-fruit machine characterized that a magnetic switch is set inside the feed tube, the magnetic switch is connected electrically to motor, a magnetic driving unit is set in the pusher, when the pusher is inserted into the feed tube, the magnetic switch receives the signal of the magnetic driving unit so that the power is on, oppositely, power will be off due to the pusher is gotten away from the feed tube. But there is a defect in above patent, because of the magnetic switch is set on the top of the feed tube, it needs some long wires for the connection of the switch and circuit board or power outlet, so the wires are so complicated and bad for assembly, that the cost will be higher. Meanwhile, the patent has another embodiment whose switch is micro switch connected to elastic assembly. And the driving unit has a protruding part protruded outside the feed tube. The protruding part will move the micro switch to turn on power after the pusher is inserted into the feed tube. That will be related to the matter of reliability and service life. There is a kind of technology about juicer's safety mechanism illustrated that a magnetic switch is set in base and a magnetic matters are set in big feed tube and pusher. When the pusher has been installed, the magnetic matter will trigger the magnetic switch for power on. Even if the above design can remove the connected complication of wire, but if the pusher has not been installed yet, when outside magnetic matter closed the big feed tube to be outside interference, which will turn on the magnetic switch for motor on, so it is dangerous for the above wrong running existing in juicer.

WO2012075525 discloses a food processor which has a pusher that cooperates with a safety mechanism. The safety mechanism comprises a linkage assembly that prevents the food processor's motor from operating unless the pusher is inserted into the feed tube. However, it is not provided with any means to prevent wrong running of the food processor caused by interference of foreign magnetic components which may inadvertently and undesirably actuate the magnetic switch of the food processor's motor.

### Disclosure of the Invention

An object of the present invention is to settle shortages of the existing technology, to provide a juicer which can be more reliable and safer.

A juicer, include a base, a motor, a cover, a pusher, a linkage assembly and a trigger assembly. The base defines a receiving cave therein for receiving a cutter and food to be processed. The motor is used for driving the cutter. The cover is fixed on the base, a feed tube extends upwardly from the cover and acting as an entrance for the food. The pusher is configured to be inserted into the feed tube to push the food into the receiving cave. The linkage assembly is configured at the feed tube. The trigger assembly is connected to the linkage assembly and configured for generating a trigger signal to start the motor. The linkage assembly includes a pressure component and a follower lever. The pressure component is movable connected to the feed tube and close the opening of the feed tube; the follower lever is rotatably connected to the pressure component, and can be moved up and down; the trigger assembly includes two signal generators connected to the end of the follower lever and three inductors configured at the base; at least one weakest area of signal exist between the two signal generators, and the three inductors are placed face to face with the two signal generators and the at least one weakest area, respectively; the three inductors are connected electrically with the motor's control circuit; electronic system of the juicer is preset to achieve motor running only when two of the inductors corresponding to the two signal generators detect magnetic force and thus receive signals from the two signal generators while a third of the inductors corresponding to the weakest area does not receive any signal from the weakest area.

Preferably, the pressure component includes a first link and a second link, a terminal of the first link is rotatably connected to the feed tube, the other terminal of the first link is rotatably connected to a terminal of the second link, the other terminal of the second link is rotatably connected to the follower lever, the side wall of the feed tube defines a hole which is right against the connection joint between the first link and the second link, the connection joint extends into the inside of the feed tube, and can be moved downwardly by the pusher when the pusher is inserted in the feed tube; when the connection joint is moved downwardly the follower lever is pushed by the second link to move downwardly accordingly.

Preferably, an elastic element is set between the follower lever and the cover in order to lift the follower lever upwardly when the pusher is removed from the feed tube.

Preferably, the elastic element is spring which is depressed between the follower lever and the cover.

Preferably, the inductors are magnetic sensors, the signal generators are magnets.

Preferably, the magnets are placed side by side at a distance, a weakest area of signal exists between the magnets, the magnetic sensors are placed face to face with the magnets and the weakest area of signal, respectively.

Preferably, the magnetic sensors are magnetic reed switches.

Preferably, the inductors is configured inside or outside the base.

Comparing with the conventional juicer, the invention has the following advantages:
(1) It can avoid the trouble of linkage complication of wires due to the non-contact trigger unit of magnetic switches and inductors. So that it lowers the trigger unit's running length and lowers machining precision and lowers the cost of production.
(2) It can avoid the wrong running of juicer by outside magnetic matters, because of it utilizes the magnetic inductors and the magnet to form switch to control motor's driving.

### Brief Description of Drawings

FIG.1 is a perspective view of a juicer in according to a first embodiment of the present invention.
FIG. 2 is an enlarged view of A of FIG. 1.
FIG. 3 is a diagram of inductors and magnet units in according to the first embodiment of the present invention, three inductors sit against two magnets and the weakness area "O" between the two magnets.
FIG. 4 is a cross-sectional view of a part of the juicer of FIG. 1, the pusher is not inserted into the feed tube and the signal generators does not been triggered by the inductors in according to the first embodiment FIG. 5 is an enlarged view of B of FIG. 4.
FIG. 6 is a cross-sectional view of a part of the juicer of FIG. 1, the pusher is inserted into the feed tube and the signal generators has been triggered by the inductors in according to the first embodiment
FIG. 7 is a cross-sectional view of a part of a juicer in according to a second embodiment of the present invention, a pusher is not inserted into a feed tube and a signal generators is not been triggered by the inductors.
FIG. 8 is another cross-sectional view of the part of the juicer of FIG. 7, the pusher has been inserted into the feed tube and the signal generators has been triggered by the inductors in according to the second embodiment.

### Best Mode for Carrying out the Invention

Embodiments of the present invention will be described in detail below, with reference to the accompanying drawings.

### Embodiment I:

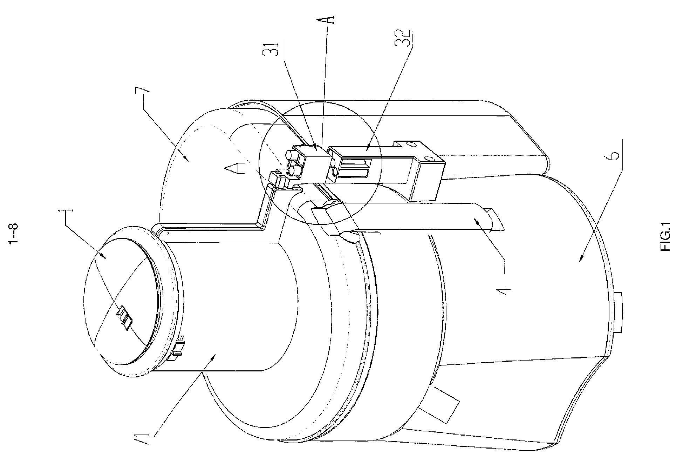

Referring to FIG.1, a juicer in according to a first embodiment of the present invention mainly includes a base 6 and a cover 7 fixed on the base 6. A feed tube 71 is configured on the cover 7. A pusher 1 matched the feed tube 71 is removable inserted in the feed tube. A cutter (not shown in the view) is set in the base and under the feed tube 71. The same to the conventional juicers, the cutter is driven by a motor which is controlled by a control circuit.

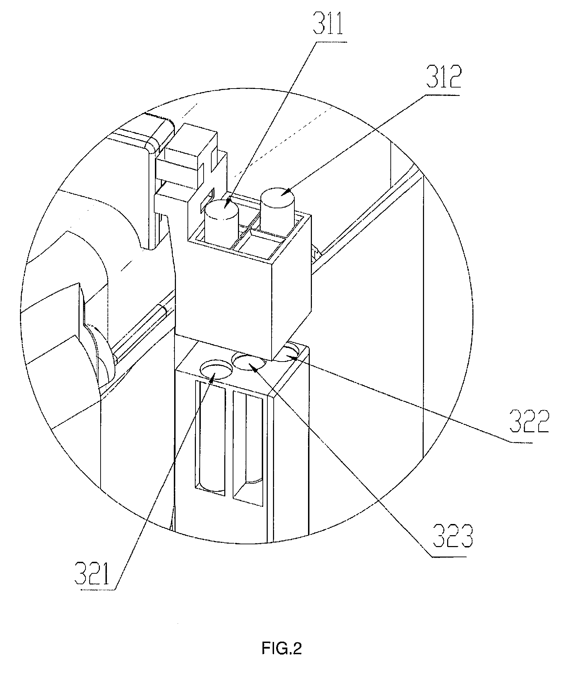

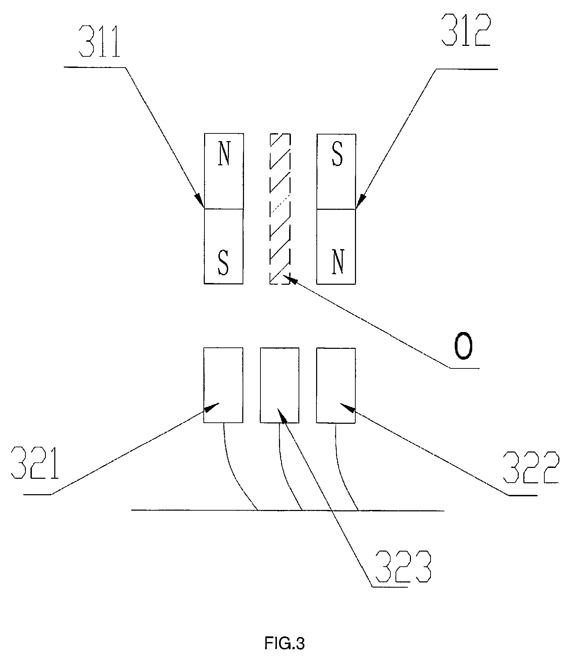

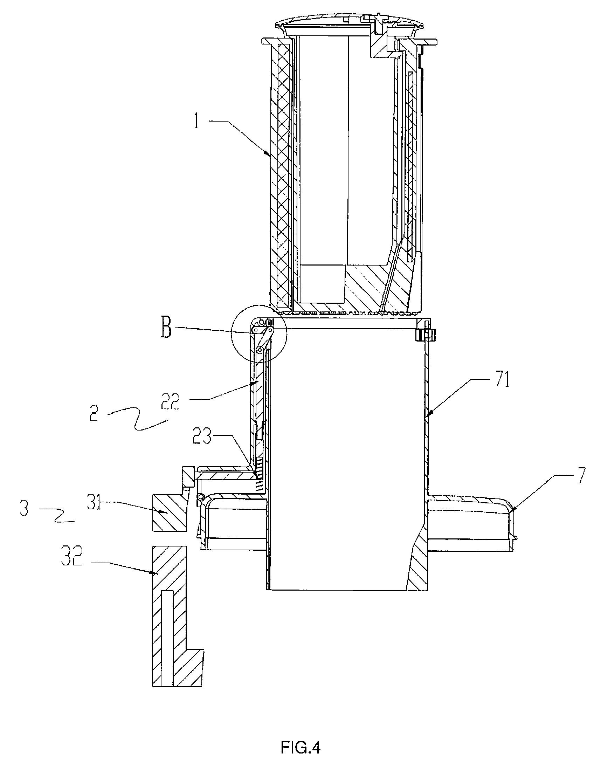

Referring to FIG.2 to FIG.4, the juicer also includes a linkage assembly 2 and a trigger assembly 3 connected to the end of the linkage assembly 2. The trigger assembly 3 is configured for generating trigger signals for the motor.

The linkage assembly 2 is configured at the outside wall of the feed tube 71 and the cover 7. In detail, the linkage assembly 2 is settled in a case 8 attached to the outside wall of the feed tube 71 and the up-surface of the cover 7.

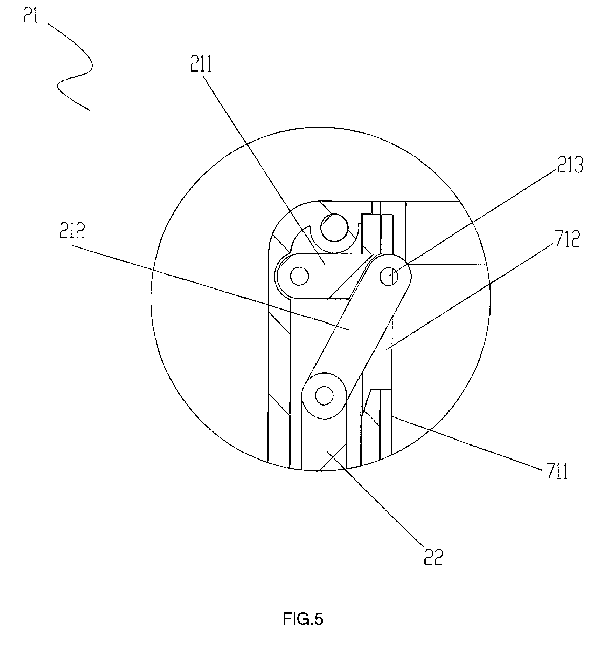

The linkage assembly 2 includes a pressure component 21, a follower lever 22 and an elastic element 23. Referring also to FIG. 5, the pressure component 21 includes a first link 211 and a second link 212. A terminal of the first link 211 is removable connected to the inside wall of the case 8. The other terminal of the first link 211 is rotatably connected to a terminal of the second link 212 via a hinge joint. The other terminal of the second link 212 is rotatably connected to the follower lever 22 via a hinge joint. The side wall 711 of the feed tube 71 defines a hole 712 which is right against the connection joint 213 between the first link 211 and the second link 212. In the embodiment, the hole 712 is close to the opening 71 of the feed tube 71. The connection joint 213 extends into the inside of the feed tube 71, and can be moved downwardly by the pusher 1 when the pusher 1 is inserted in the feed tube 71. When the connection joint 213 is moved downwardly the follower lever 22 is pushed by the second link 212 to move downwardly accordingly.

The follower lever 22 is substantially L-shaped, it includes a first part which is connected to the end of the pressure component 21 and can move up and down along the outside wall of the feed tube 71, and a second part which extends perpendicularly from the end of the first part and is substantially parallel to the up-surface of the cover 1.

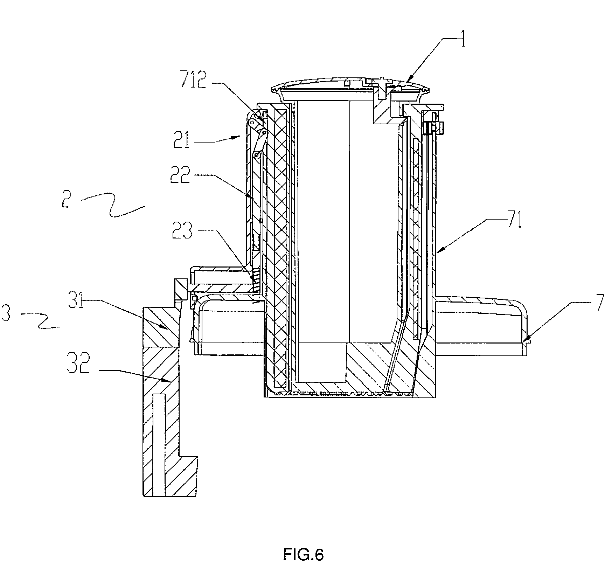

The elastic element 23 sits between the end of the first part of the follower lever 22 and the up-surface of the cover 7, and is depressed by the follower lever 22. When the pusher 1 is removed from the feed tube 71, the elastic element 23 lift up the follower lever 22 and let the connection joint 213 stay in the top of the hole 712 (see FIG. 5). When the pusher 1 is inserted in the feed tube 71, the follower lever 22 moves downwardly, the elastic element 23 is further compressed, and the connection joint 213 stays in a lower space of the hole 712 (see FIG. 6).

The trigger assembly 3 includes a signal generator 31 connected to the end of the linkage assembly 2 and a signal receiver 32 configured at the base 6. The signal generator 31 moves along the follower lever 22. When the follower lever 22 moves to the lowest point, the signal receiver 32 can receive the signal sent from the signal generator 31. When the follower lever 22 moves upwardly from the lowest point to a preset level, the signal receiver 32 can not receive the signal sent from the signal generator 31. When the signal receiver 32 receives the signal from the signal generator 31, the signal receiver 32 will generate and send a trigger signal to the control circuit to start the motor, such that the motor operates to drive the cutter of the juicers to rotate.

In the embodiment, the signal generator 31 includes a first magnet 311 and a second magnet 312, and the signal receiver 32 includes three magnetic sensors 321, 322, 323 as inductors. The first and second magnets 311, 312 are straight bars and parallel with each other. Furthermore, the first and second magnets 311, 312 are placed in opposite polarity and have a certain distance between each other, thus that there is a weakest area "O" existing between the first and second magnets 311, 312, and the magnet force in the weakest area "O" is nearly zero.

The three magnetic sensors 321, 322, 323 are connected electrically with the motor's control circuit. The three magnetic sensors 321, 322, 323 are configured right against the ends of the first and second magnets 311,312 and the weakest area O, thus that when the signal generator 31 is lowered to a predetermined height, the magnetic sensors 321, 322 can senses the magnetic force from the first and second magnets 311, 312. In the embodiment, the magnetic sensors 321, 322, 323 are a first magnetic reed switch, a second magnetic reed switch and a third magnetic reed switch, respectively.

When the follower lever 22 moves down to a preset position, the magnet unit 31 enters the induction area of the signal receiver 32. The first magnetic reed switch 321 and the second magnetic reed switch 322 detect the magnetic force (in other words, receive signals from the first and second magnets 311, 312) of the first and second magnets 311, 312 respectively, while the third magnetic reed switch 323 dose not receive any signal from the weakest area "O". The magnetic sensors 321, 322 generate predetermined electrical signals accordingly, and the control circuit starts the motor. On the other hand, electronic system of the juicer should preset that only when receiving the above signal condition, the signal receiver 32 will let power on to achieve the motor running.

When the follower lever 22 moves up and the magnet unit 31 leaves the induction area of the signal receiver 32, the first, second and third magnetic reed switches 321, 322, 323 can not detect the magnetic force (in other words, do not receive signals) of the first and second magnets 311, 312. There is no predetermined electrical signals output from the signal receiver 32, and the control circuit will not start the motor.

When there are interference signals, thus as a magnet comes close to the juicer (when the pusher 1 has not been inserted into the feed tube 71), one or two or all of the magnetic sensors 321, 322, 323 will detect the magnetic force from the magnet and generate electrical signals accordingly. Because a interference signal that causes the magnetic sensors 321 and 322 generate electrical signals at the same time with the magnetic sensor 323 does not rarely exists, it means it will not reach the preset signal condition for the control circuit to start the motor. So it can avoid the wrong running of juicer by outside magnetic matters and make the juicer be safer.

### Embodiment II:

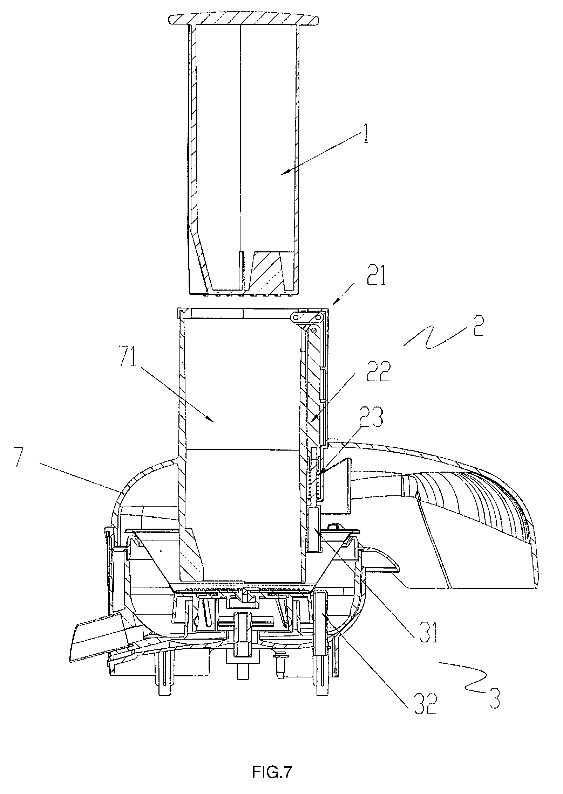

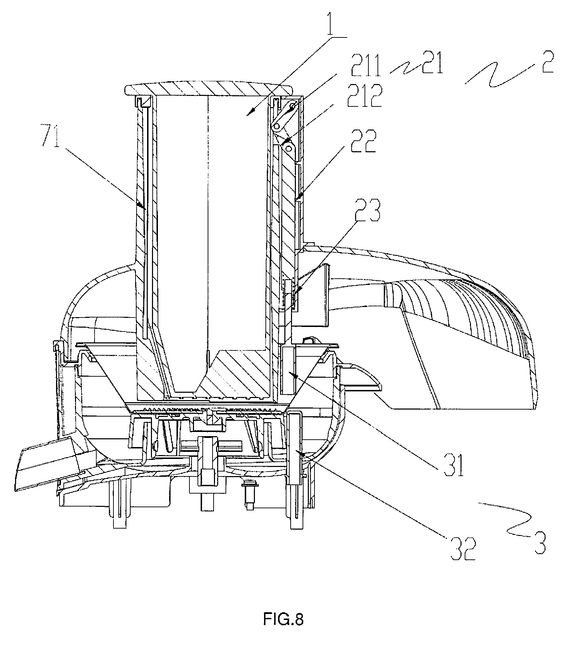

Referring to FIG.7 to FIG.8, embodiment II is similar to Embodiment I on structure. But it's different from the position of the trigger assembly 3. In the Embodiment I, the inductors 31 and the signal receiver 32 are installed outside the base 6 and the cover 7 of the juicer. However, in the Embodiment II, the signal receiver 32 is installed inside the base 6 and below the cutter. The follower lever 22 moves the magnet unit 31 downward as long as reaching the induction area, the signal receiver 32 senses signal from the magnet unit 31 so that the control circuit is power on and the motor and cutter run. The above design is aimed at avoiding magnetic signal interference outside. Via setting the signal receiver 32 inside the base and because of effective barrier by the housing and other parts of the juicer, any outside magnetic matters could not close the signal receiver 32 so that the invention can be effective to prevent wrong motor start from magnetic signal interference outside and to be safer for users.

The above statement represents a typical operation of the invention. The invention should not be limited within the scope of the above detailed statement only. It will be appreciated that various modifications may be made to the embodiments described above. To the person skilled in the art, other changes and modifications which are based on this invention could be made, such as to change the number or the shape or the type (photosensor or thermistors or electromagnetic wave etc.) of the signal generator and inductor. The idea of this invention and the above stated possibilities shall all be protected under this patent application.

## Claims

1. A juicer, comprising:
a base (6) defining a receiving cave therein for receiving a cutter and food to be processed;
a motor for driving the cutter;
a cover (7) fixed on the base (6), a feed tube (71) extending upwardly from the cover (7) and acting as an entrance for the food;
a pusher (1) configured to be inserted into the feed tube (71) to push the food into the receiving cave;
a linkage assembly (2) configured at the feed tube (71); and
a trigger assembly (3) connected to the linkage assembly (2) and configured for generating a trigger signal to start the motor;
the linkage assembly (2) comprises a pressure component (21) and a follower lever (22); the pressure component (21) is movably connected to the feed tube (71) and close the opening of the feed tube (71); the follower lever (22) is rotatably connected to the pressure component (21), and is movable up and down;
the juicer is **characterized in that**, the trigger assembly (3) comprises two signal generators (311, 312) connected to an end of the follower lever (22) and three inductors (321, 322, 323) configured at the base; at least one weakest area (O) of signal exist between the two signal generators (311, 312), and the three inductors (321, 322, 323) are placed face to face with the two signal generators (311, 312) and the at least one weakest area (O), respectively; the three inductors (321, 322, 323) are connected electrically with the motor's control circuit; electronic system of the juicer is preset to achieve motor running only when two (321, 322) of the inductors (321, 322, 323) corresponding to the two signal generators (311, 312) detect magnetic force and thus receive signals from the two signal generators (311, 312) while a third (323) of the inductors (321, 322, 323) corresponding to the weakest area (O) does not receive any signal from the weakest area (O).

2. The juicer of claim 1, wherein the pressure component (21) comprises a first link (211) and a second link (212), one terminal of the first link (211) is rotatably connected to the feed tube (71), another terminal of the first link (211) is rotatably connected to one terminal of the second link (212), another terminal of the second link (212) is rotatably connected to the follower lever (22), a side wall of the feed tube (71) defines a hole (712) which is right against a connection joint (213) between the first link (211) and the second link (212), the connection joint (213) extends into inside of the feed tube (71), and is movable downwardly by the pusher (1) when the pusher (1) is inserted in the feed tube (71); when the connection joint (213) is moved downwardly, the follower lever (22) is pushed by the second link (212) to move downwardly accordingly.

3. The juicer of claim 2, wherein an elastic element (23) is set between the follower lever (22) and the cover (7) in order to lift the follower lever (22) upwardly when the pusher (1) is removed from the feed tube (71).

4. The juicer of claim 3, wherein the elastic element (23) is a spring which is depressed between the follower lever (22) and the cover (7).

5. The juicer of claim 1, wherein the inductors (321, 322, 323) are magnetic sensors, the signal generators (311, 312) are magnets.

6. The juicer of claim 5, wherein the magnets are placed side by side at a distance, the weakest area (O) of signal exists between the magnets, the magnetic sensors are placed face to face with the magnets and the weakest area (O) of signal, respectively.

7. The juicer of claim 6, wherein the magnetic sensors are magnetic reed switches.

8. The juicer of claim 1, wherein the inductors (321, 322, 323) are configured inside or outside the base (6).

## Patentansprüche

1. Entsafter, umfassend:
eine Basis (6), worin ein Aufnahmeraum zur Aufnahme einer Schneideinrichtung und eines zu verarbeitenden Lebensmittels definiert ist;
einen Motor zum Antrieb der Schneideinrichtung;
eine Abdeckung (7), die an der Basis (6) fixiert ist, wobei sich ein Zuführrohr (71) von der Abdeckung (7) aufwärts erstreckt und als Zugang für das Lebensmittel wirkt;
einen Schieber (1), der zum Einsatz in das Zuführrohr (71) ausgebildet ist, um das Lebensmittel in den Aufnahmeraum zu schieben;
einen Verbindungsaufbau (2), der an dem Zuführrohr (71) ausgebildet ist; und
einen Auslöseaufbau (3), der mit dem Verbindungsaufbau (2) verbunden ist und dazu ausgebildet ist, ein Auslösesignal zum Starten des Motors zu erzeugen;
wobei der Verbindungsaufbau (2) einen Druckbestandteil (21) und einen Mitnehmerhebel (22) umfasst; der Druckbestandteil (21) beweglich mit dem Zuführrohr (71) verbunden ist und die Öffnung des Zuführrohrs (71) verschließt; und der Mitnehmerhebel (22) drehbar mit dem Druckbestandteil (21) verbunden ist und auf und ab beweglich ist;
wobei der Entsafter **dadurch gekennzeichnet ist, dass** der Auslöseaufbau (3) zwei Signalerzeuger (311, 312), die mit einem Ende des Mitnehmerhebels (22) verbunden sind, und drei Induktoren (321, 322, 323), die an der Basis ausgebildet sind, umfasst; zwischen den beiden Signalerzeugern (311, 312) wenigstens ein schwächster Bereich (0) eines Signals vorhanden ist, und die drei Induktoren (321, 322, 323) so angeordnet sind, dass sie zu den beiden Signalerzeugern (311, 312) bzw. dem wenigstens einen schwächsten Bereich (0) gewandt sind; die drei Induktoren (321, 322, 323) elektrisch an die Steuerschaltung des Motors angeschlossen sind; das elektronische System des Entsafters so voreingestellt ist, dass nur dann ein Motorbetrieb erreicht wird, wenn zwei (321, 322) der Induktoren (321, 322, 323), die den beiden Signalerzeugern (311, 312) entsprechen, eine Magnetkraft detektieren und somit Signale von den beiden Signalerzeugern (311, 312) erhalten, während ein dritter Induktor (323) der Induktoren (321, 322, 323), der dem schwächsten Bereich (0) entspricht, von dem schwächsten Bereich (0) keinerlei Signal erhält.

2. Entsafter nach Anspruch 1, wobei der Druckbestandteil (21) ein erstes Verbindungsstück (211) und ein zweites Verbindungsstück (212) umfasst, ein Ende des ersten Verbindungsstücks (211) drehbar mit dem Zuführrohr (71) verbunden ist, ein anderes Ende des ersten Verbindungsstücks (211) drehbar mit einem Ende des zweiten Verbindungsstücks (212) verbunden ist, ein anderes Ende des zweiten Verbindungsstücks (212) drehbar mit dem Mitnehmerhebel (22) verbunden ist, eine Seitenwand des Zuführrohrs (71) eine Öffnung (712) definiert, die sich gerade an einem Verbindungsgelenkstück (213) zwischen dem ersten Verbindungsstück (211) und dem zweiten Verbindungsstück (212) befindet, wobei sich das Verbindungsgelenkstück (213) in das Innere des Zuführrohrs (71) erstreckt und durch den Schieber (1) nach unten beweglich ist, wenn der Schieber (1) in das Zuführrohr (71) eingesetzt ist; wobei der Mitnehmerhebel (22) dann, wenn das Verbindungsgelenkstück (213) nach unten bewegt wird, durch das zweite Verbindungsstück (212) so geschoben wird, dass er sich entsprechend nach unten bewegt.

3. Entsafter nach Anspruch 2, wobei ein elastisches Element (23) zwischen dem Mitnehmerhebel (22) und der Abdeckung (7) angeordnet ist, um den Mitnehmerhebel (22) nach oben anzuheben, wenn der Schieber (1) von dem Zuführrohr (71) abgenommen ist.

4. Entsafter nach Anspruch 3, wobei das elastische Element (23) eine Feder ist, die zwischen dem Mitnehmerhebel (22) und der Abdeckung (7) zusammengedrückt ist.

5. Entsafter nach Anspruch 1, wobei die Induktoren (321, 322, 323) Magnetsensoren sind, und die Signalerzeuger (311, 312) Magnete sind.

6. Entsafter nach Anspruch 5, wobei die Magnete nebeneinander in einem Abstand angeordnet sind, der schwächste Bereich (0) des Signals zwischen den Magneten vorhanden ist, und die Magnetsensoren so angeordnet sind, dass sie zu den Magneten bzw. dem schwächsten Bereich (0) des Signals gewandt sind.

7. Entsafter nach Anspruch 6, wobei die Magnetsensoren magnetische Reed-Schalter sind.

8. Entsafter nach Anspruch 1, wobei die Induktoren (321, 322, 323) innerhalb oder außerhalb der Basis (6) ausgebildet sind.

## Revendications

1. Centrifugeuse comprenant :
une base (6) définissant une cavité de réception à l'intérieur pour recevoir une lame et des aliments à préparer ;
un moteur pour entraîner la lame ;
un couvercle (7) fixé sur la base (6), un tube d'alimentation (71) s'étendant vers le haut depuis le couvercle (7) et servant d'entrée pour les aliments ;
un poussoir (1) configuré pour être inséré dans le tube d'alimentation (71) pour pousser les aliments dans la cavité de réception ;
un montage de liaison (2) configuré sur le tube d'alimentation (71) ; et
un montage de déclencheur (3) relié au montage de liaison (2) et configuré pour générer un signal déclencheur pour démarrer le moteur ;
le montage de liaison (2) comprend un composant de pression (21) et un levier prolongateur (22) ; le composant de pression (21) est relié de façon mobile au tube d'alimentation (71) et près de l'ouverture du tube d'alimentation (71) ; le levier prolongateur (22) est relié de façon rotative au composant de pression (21) et est mobile de haut en bas ;
la centrifugeuse est **caractérisée en ce que** le montage de déclencheur (3) comprend deux générateurs de signal (311, 312) reliés à une extrémité du levier prolongateur (22) et trois inducteurs (321, 322, 323) configurés sur la base ; au moins une zone la plus faible (0) du signal existe entre les deux générateurs de signal (311, 312), et les trois inducteurs (321, 322, 323) sont placés face à face avec les deux générateurs de signal (311, 312) et l'au moins une zone la plus faible (0), respectivement ; les trois inducteurs (321, 322, 323) sont reliés électriquement au circuit de commande du moteur ; le système électronique de la centrifugeuse est pré-réglé pour obtenir une marche du moteur uniquement lorsque deux (321, 322) des inducteurs (321, 322, 323) correspondant aux deux générateurs de signal (311, 312) détectent la force magnétique et reçoivent ainsi des signaux des deux générateurs de signal (311, 312) tandis qu'un troisième (323) des inducteurs (321, 322, 323) correspondant à la zone la plus faible (0) ne reçoit aucun signal de la zone la plus faible (0).

2. Centrifugeuse selon la revendication 1, dans laquelle le composant de pression (21) comprend un premier lien (211) et un second lien (212), un terminal du premier lien (211) est relié en rotation au tube d'alimentation (71), un autre terminal du premier lien (211) est relié en rotation à un terminal du second lien (212), un autre terminal du second lien (212) est relié en rotation au levier prolongateur (22), une paroi latérale du tube d'alimentation (71) définit un orifice (712) qui est tout contre une articulation de connexion (213) entre le premier lien (211) et le second lien (212), l'articulation de connexion (213) s'étend à l'intérieur du tube d'alimentation (71) et est mobile vers le bas par le poussoir (1) lorsque le poussoir (1) est inséré dans le tube d'alimentation (71) ; lorsque l'articulation de connexion (213) est déplacée vers le bas, le levier prolongateur (22) est poussé par le second lien (212) et se déplace vers le bas, de façon correspondante.

3. Centrifugeuse selon la revendication 2, dans laquelle un élément élastique (23) est réglé entre le levier prolongateur (22) et le couvercle (7) afin de soulever le levier prolongateur (22) vers le haut lorsque le poussoir (1) est retiré du tube d'alimentation (71).

4. Centrifugeuse selon la revendication 3, dans laquelle l'élément élastique (23) est est un ressort qui est sollicité entre le levier prolongateur (22) et le couvercle (7).

5. Centrifugeuse selon la revendication 1, dans laquelle les inducteurs (321, 322, 323) sont des capteurs magnétiques, les générateurs de signal (311, 312) sont des aimants.

6. Centrifugeuse selon la revendication 5, dans laquelle les aimants sont placés côte à côte à distance, la zone la plus faible (0) du signal existe entre les aimants, les capteurs magnétiques sont placés face à face avec les aimants et la zone la plus faible (0) du signal, respectivement.

7. Centrifugeuse selon la revendication 6, dans laquelle les capteurs magnétiques sont des interrupteurs à lames.

8. Centrifugeuse selon la revendication 1, dans laquelle les inducteurs (321, 322, 323) sont configurés à l'intérieur ou à l'extérieur de la base (6).
